# EUROPEAN PATENT SPECIFICATION

(11) **EP 4 606 520 B1**
(45) Date of publication and mention of the grant of the patent: **21.10.2026**
(21) Application number: 25155960.5
(22) Date of filing: 05.02.2025
(51) Int. Cl.: B24B 39/00, B24B 39/06, B24B 27/00

(54) **MECHANICAL SURFACE TREATING COMPONENT WITH SPHERICAL ROLLER**
MECHANISCHE OBERFLÄCHENBEHANDLUNGSKOMPONENTE MIT KUGELROLLE
COMPOSANT DE TRAITEMENT DE SURFACE MÉCANIQUE À ROULEAU SPHÉRIQUE

(30) Priority: 05.02.2024 US 202418432855
(43) Date of publication of application: 27.08.2025
(73) Proprietor: RTX Corporation, Farmington, CT 06032 (US)
(72) Inventor: WYSOCKI, Joseph B., Somers, 06071 (US); EL-WARDANY, Tahany, Vernon, 06066 (US); BARNAT, Krzysztof, Berlin, 06037 (US); GORMLEY, Stephen, Manchester, 06040 (US); GREENBANK, Samuel, Vernon, 06066 (US)
(74) Representative: Dehns

(56) References cited:
- EP-B1- 2 759 373
- JP-A- 2013 158 856
- JP-A- H1 110 432
- RU-U1- 177 001
- US-A- 5 826 453
- US-B2- 7 526 965

## Description

### BACKGROUND OF THE DISCLOSURE

### 1. Technical Field

This disclosure relates generally to mechanical surface treating a component such as, for example, an aerospace component.

### 2. Background Information

A surface of a component may be mechanically treated to impart compressive stresses within material of the component below the surface. Various systems and methods are known in the art for mechanical surface treating of a component. While these known mechanical surface treatment systems and methods have various benefits, there is still room in the art for improvement.

RU 177 001 U1 discloses a prior art system for mechanical surface treating a component.

EP 2 759 373 B1 discloses a system according to the preamble of claim 1.

### SUMMARY OF THE DISCLOSURE

According to an aspect of the present invention, a system is provided for mechanical surface treating a component according to claim 1.

Features of embodiments of the invention are set forth in the dependent claims.

The foregoing features and the operation of the invention will become more apparent in light of the following description and the accompanying drawings.

### BRIEF DESCRIPTION OF THE DRAWINGS

FIG. 1 is a schematic illustration of a system for mechanical surface treating a component.
FIG. 2 is a partial sectional illustration of a mechanical surface treatment tool engaging a component surface.
FIG. 3 is another partial sectional illustration of the mechanical surface treatment tool engaging the component surface.
FIG. 4 is a flow diagram of a method for mechanical surface treating a component.
FIG. 5 is a partial sectional illustration of the mechanical surface treatment tool engaging the component surface with a gas bearing.
FIG. 6 is a sectional illustration of a housing for the mechanical surface treatment tool.
FIGS. 7A and 7B are schematic illustrations of a spherical roller and a spherical bearing element with various dimensional relationships.

### DETAILED DESCRIPTION

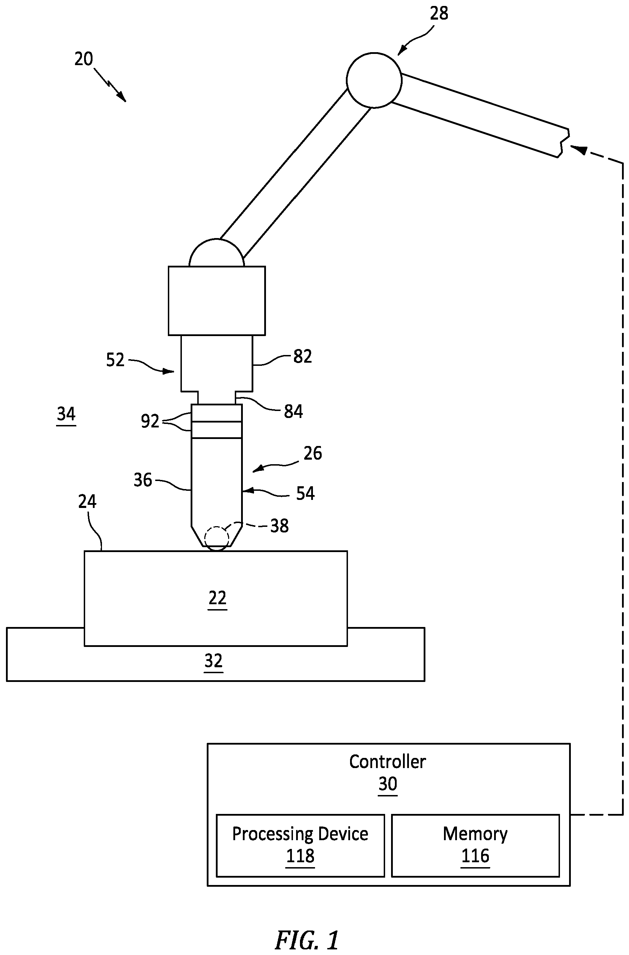

FIG. 1 illustrates a system 20 for mechanical surface treating a component 22; e.g., a metal aerospace component. This treatment system 20 is configured to impart compressive stresses within material of the component 22 below and adjacent an exterior surface 24 of the component 22. The treatment system 20 includes a mechanical surface treatment tool 26 (e.g., a deep rolling tool), a manipulator 28 and a controller 30. The treatment system 20 of FIG. 1 also includes a fixture 32 for holding the component 22 within a workspace 34 during the mechanical surface treatment.

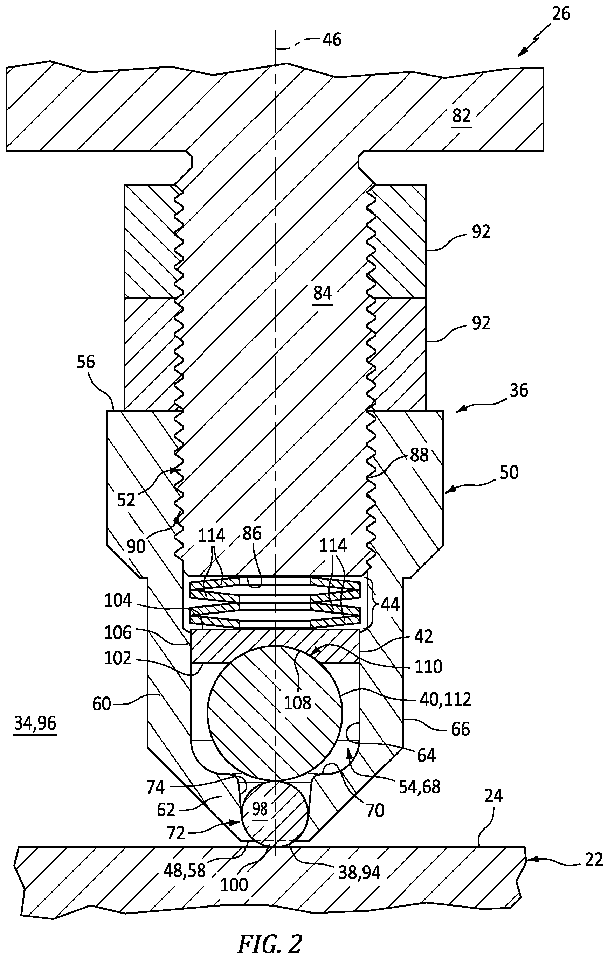

Referring to FIG. 2, the mechanical surface treatment tool 26 includes a roller support 36, a spherical roller 38 and a roller support assembly. The roller support assembly of FIG. 2 includes a spherical bearing element 40, a bushing 42 and a biasing device such as a spring element 44.

The roller support 36 extends longitudinally along a longitudinal axis 46 to a distal end 48 (e.g., a tip) of the roller support 36. This axis 46 may be a centerline axis of the mechanical surface treatment tool 26 and/or one or more of its elements; e.g., the roller support 36, the bushing 42 and the spring element 44. The roller support 36 of FIG. 2 includes a housing 50, an adaptor 52 and an internal cavity 54.

The support housing 50 extends longitudinally along the axis 46 from a base end 56 of the support housing 50 to a distal end 58 of the support housing 50; e.g., the support distal end 48. The support housing 50 includes a tubular sidewall 60 and a tip endwall 62.

The housing sidewall 60 extends longitudinally from the housing base end 56 to the housing endwall 62. The housing sidewall 60 extends radially from a radial inner side 64 of the housing sidewall 60 to a radial outer side 66 of the support housing 50 and its housing sidewall 60. The housing sidewall 60 extends circumferentially around the axis 46 providing the housing sidewall 60 with a full-hoop tubular geometry. With this arrangement, the sidewall inner side 64 forms an outer peripheral boundary of an internal bore 68 of the support housing 50.

The housing endwall 62 is connected to (e.g., formed integral with) the housing sidewall (60). The housing endwall 62 is arranged at (e.g., on, adjacent or proximate) the support distal end 48 / the housing distal end 58. The housing endwall 62 of FIG. 2, for example, extends longitudinally along the axis 46 from the housing sidewall 60 to the support distal end 48 / the housing distal end 58. The housing endwall 62 caps the housing bore 68. The housing bore 68 of FIG. 2 thereby projects longitudinally along the axis 46 into the support housing 50 from the housing base end 56 to the housing endwall 62 at an interior side 70 of the housing endwall 62.

The housing endwall 62 includes a port 72. The port 72 extends longitudinally along the axis 46 through the housing endwall 62 from the endwall interior side 70 to the support distal end 48 / the housing distal end 58. This port 72 is at least partially or completely formed by a bearing surface 74 of the housing endwall 62. The port 72 of FIG. 2, for example, projects radially out from the axis 46 to the endwall bearing surface 74, where the endwall bearing surface 74 extends circumferentially around (e.g., circumscribes) the axis 46 and the port 72.

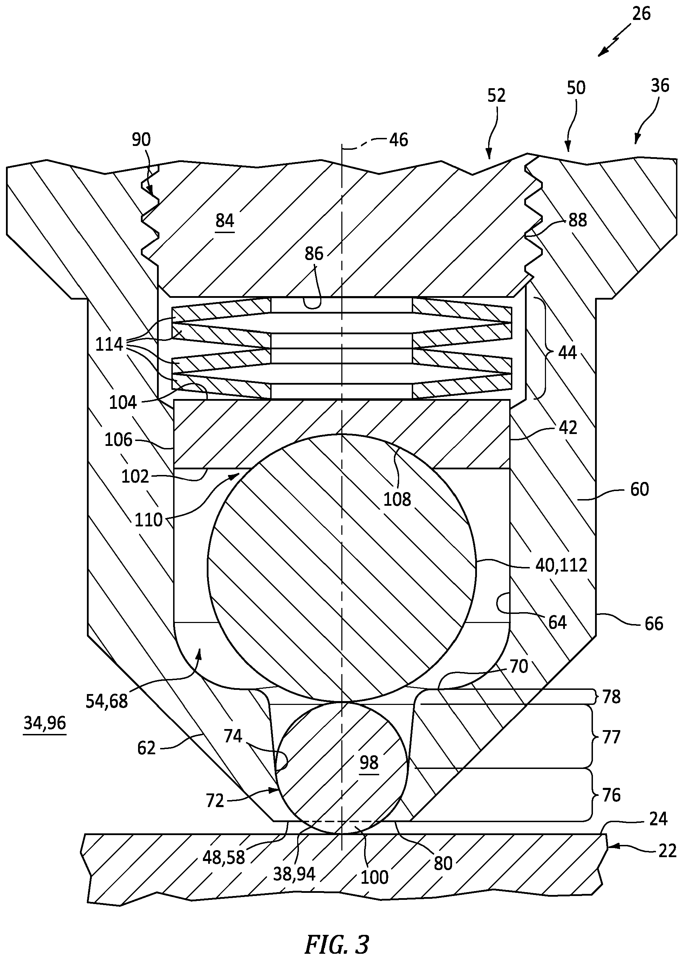

Referring to FIG. 3, the endwall bearing surface 74 may include one or more longitudinal segments 76-78. The bearing segment 76 is disposed at the support distal end 48 / the housing distal end 58. The bearing segment 76 of FIG. 3, for example, extends longitudinally along the axis 46 from the bore segment 77 to the support distal end 48 / the housing distal end 58. The endwall bearing surface 74 and its bearing segment 76 may thereby be contiguous with an exterior tip surface 80 of the support housing 50 at its support distal end 48. The bearing segment 76 of FIG. 3 has an annular spherical segment geometry configured to accommodate and mate with the spherical roller 38 as described below. The bore segment 77 extends longitudinally along the axis 46 (in a longitudinal direction towards the endwall interior side 70) from the bearing segment 76 to the flare segment 78, or alternatively to the endwall interior side 70 where the flare segment 78 is omitted. The bore segment 77 may have an annular frustoconical geometry which (e.g., continuously) flares radially outward away from the axis 46 as the bore segment 77 extends longitudinally from (or about) the bearing segment 76 to (or about) the flare segment 78. The flare segment 78 is disposed at the endwall interior side 70. The flare segment 78 of FIG. 3, for example, extends longitudinally along the axis 46 from the bore segment 77 to the endwall interior side 70. The flare segment 78 may have an annular frustoconical geometry which (e.g., continuously) flares radially outward away from the axis 46 as the flare segment 78 extends longitudinally from (or about) the bore segment 77 to (or about) the endwall interior side 70. With this arrangement, the port 72 of FIG. 3 tapers radially inward towards the axis 46 as the port 72 extends longitudinally along the axis 46 from (or about) the endwall interior side 70 to (or about) the support distal end 48 / the housing distal end 58.

Referring to FIG. 1, the support adaptor 52 is configured for mounting the mechanical surface treatment tool 26 to the manipulator 28. Referring to FIG. 2, the support adaptor 52 includes a base 82 and a mount 84 connected to (e.g., formed integral with) the adaptor base 82. The adaptor mount 84 projects longitudinally along the axis 46 out from the adaptor base 82 to a distal end 86 of the support adaptor 52 and its adaptor mount 84. The adaptor mount 84 projects radially out to a radial outer side 88 of the adaptor mount 84. At least a portion or an entirety of the mount outer side 88 may be externally threaded; e.g., include exterior threads. Similarly, a portion of the sidewall inner side 64 may be internally threaded; e.g., include interior threads. The adaptor mount 84 may thereby mate with the support housing 50 through a threaded interface 90. The adaptor mount 84 of FIG. 2, for example, is inserted longitudinally into the housing bore 68 and threaded into the support housing 50 and its housing sidewall 60. One or more jam nuts 92 may also be threaded onto the adaptor mount 84 to rotationally lock the support housing 50 onto the support adaptor 52. Of course, various other techniques are known in the art for securing components together, and the present disclosure is not limited to any particular ones thereof.

The internal cavity 54 of FIG. 2 extends longitudinally along the axis 46 within the roller support 36 between the support housing 50 and the support adaptor 52. In particular, the internal cavity 54 of FIG. 2 extends longitudinally within the roller support 36 from the housing endwall 62 at its endwall interior side 70 to the adaptor mount 84 at its mount distal end 86. The internal cavity 54 extends laterally within the roller support 36 and its support housing 50. In particular, the internal cavity 54 extends radially out from the axis 46 to the sidewall inner side 64.

Referring to FIG. 3, the spherical roller 38 is configured as a spherical ball such as a metal ball bearing element, a hardened steel ball, etc. This spherical roller 38 is nested in the port 72. The spherical roller 38 of FIG. 3, for example, is disposed in the port 72 with an outer exterior surface 94 of the spherical roller 38 engaging (e.g., longitudinally and/or radially abutted against and contacting) the endwall bearing surface 74 along its bearing segment 76. With this arrangement, the spherical roller 38 forms a seal with the housing endwall 62 and plugs the port 72 such that the internal cavity 54 may be fluidly decoupled (e.g., isolated) from a workspace environment 96 external to the mechanical surface treatment tool 26. Moreover, the outer exterior surface 94 of the spherical roller 38 is operable to slide against the endwall bearing surface 74 such that the spherical roller 38 may freely rotate relative to the roller support 36 and the housing endwall 62. To facilitate rolling of the spherical roller 38, the outer exterior surface 94 of the spherical roller 38 may be coated with a tribological coating. In addition or alternatively, the endwall bearing surface 74 (e.g., at least along the bearing segment 76 or an entirety thereof) may be prepared with a tribological coating. An example of the tribological coating is an electroless nickel (Ni) coating impregnated with polytetrafluoroethylene (PTFE); e.g., Teflon^{®}.

In addition to being nested with the port 72, the spherical roller 38 also projects longitudinally out from the port 72 and, more generally, the roller support 36 into the workspace environment 96. With this arrangement, a major portion 98 of the spherical roller 38 is disposed within the roller support 36 while a minor exposed portion 100 of the spherical roller 38 is disposed outside of the roller support 36 within the workspace environment 96. The exposed portion 100 of the spherical roller 38 of FIG. 3 may account for less than twenty percent (20%) or ten percent (10%) of the spherical roller 38. The present disclosure, however, is not limited to the foregoing exemplary percentages. The exposed portion 100 of the spherical roller 38, for example, may alternatively account for another percentage of the spherical roller 38 which is less than fifty percent (50%).

The spherical bearing element 40 is configured as a spherical ball such as a metal ball bearing element, a hardened steel ball, etc. The spherical bearing element 40 is disposed in the internal cavity 54 and engaged with (e.g., longitudinally abutted against and contacting) the spherical roller 38. The spherical bearing element 40 of FIG. 3, for example, may project (e.g., slightly) longitudinally into the port 72 to the spherical roller 38.

The bushing 42 extends longitudinally along the axis 46 between opposing longitudinal sides 102 and 104 of the bushing 42. The bushing 42 projects radially out from the axis 46 to a radial outer side 106 of the bushing 42. This bushing 42 is sized and arranged to longitudinally translate within the roller support 36. The bushing 42 of FIG. 3, for example, is disposed within the internal cavity 54. The bushing outer side 106 is arranged radially next to the sidewall inner side 64. With this arrangement, the bushing 42 and its bushing outer side 106 may slide longitudinally along the housing sidewall 60 and its sidewall inner side 64.

The bushing 42 includes a bearing surface 108 which forms a recess 110 in the bushing 42. The recess 110 of FIG. 3 projects longitudinally along the axis 46 partially into the bushing 42 from the first bushing side 102. The bushing bearing surface 108 may thereby be contiguous with a side surface of the bushing 42 at its first bushing side 102. The bushing bearing surface 108 of FIG. 3 has an annular spherical segment geometry configured to accommodate and mate with the spherical bearing element 40. In particular, the spherical bearing element 40 of FIG. 3 is nested in the recess 110. The spherical bearing element 40 of FIG. 3, for example, projects longitudinally into the recess 110 such that an outer exterior surface 112 of the spherical bearing element 40 engages (e.g., longitudinally and/or radially abuts against and contacts) the bushing bearing surface 108. With this arrangement, the spherical bearing element 40 is operable to slide against the bushing bearing surface 108 such that the spherical bearing element 40 may freely rotate relative to the bushing 42. To facilitate rolling of the spherical bearing element 40, the bushing 42 may be constructed from a relatively low friction material such as bronze. In addition or alternatively, the bushing bearing surface 108 may be coated with a tribological coating. An example of this tribological coating is an electroless nickel (Ni) coating impregnated with polytetrafluoroethylene (PTFE); e.g., Teflon^{®}.

The spring element 44 is configured to longitudinally bias (e.g., preload) the spherical roller 38 against the endwall bearing surface 74. The spring element 44 of FIG. 3, for example, is disposed longitudinally within the internal cavity 54. In particular, the spring element 44 is (e.g., slightly) longitudinally compressed between and engages (a) the support adaptor 52 and its adaptor mount 84 at the mount distal end 86 and (b) the bushing 42 at its second bushing side 104. The bushing 42 is located longitudinally between the spring element 44 and the spherical bearing element 40, where the spring element 44 longitudinally biases the bushing 42 longitudinally against the spherical bearing element 40. The spherical bearing element 40 is located longitudinally between the bushing 42 and the spherical roller 38, where the spring element 44 longitudinally biases the spherical bearing element 40 longitudinally against the spherical roller 38 through the bushing 42. The spherical roller 38 is located longitudinally between the spherical bearing element 40 and the housing endwall 62, where the spring element 44 longitudinally biases the spherical roller 38 longitudinally against the housing endwall 62 sequentially through the bushing 42 and the spherical bearing element 40.

The spring element 44 of FIG. 3 includes one or more Belleville springs 114; e.g., Belleville washers. These Belleville springs 114 are serially arranged in a stack along the axis 46. The Belleville springs 114 may be arranged in one or more pairs, where each pair includes a respective set of the Belleville springs 114 with their concave regions longitudinally next to and facing one another. Alternatively, convex regions of the respective Belleville springs 114 may be longitudinally next to and face one another. Moreover, while the spring element 44 is described above as a Belleville-type spring element, the present disclosure is not limited to such an exemplary spring element configuration. The spring element 44, for example, may alternatively be configured as a coil spring element or the like.

Referring to FIG. 1, the manipulator 28 is operatively coupled to the mechanical surface treatment tool 26 through the support adaptor 52 and its adaptor base 82. The manipulator 28 is configured to move the mechanical surface treatment tool 26 within the workspace 34 relative to the component 22. The manipulator 28, for example, is configured to arrange the mechanical surface treatment tool 26 next to the component 22 such that the spherical roller 38 engages (e.g., abuts against and contacts) the component surface 24. The manipulator 28 is also configured to press the mechanical surface treatment tool 26 against the component 22. The manipulator 28, more particularly, is configured to apply a static pressure load against the component surface 24 through the mechanical surface treatment tool 26 and its spherical roller 38. An example of the manipulator 28 is a multi-axis robot; e.g., a six-axis (6-axis) robotic arm.

The controller 30 is in signal communication (e.g., hardwired and/or wirelessly coupled) with the manipulator 28. The controller 30 may be implemented with a combination of hardware and software. The hardware may include memory 116 and at least one processing device 118, which processing device 118 may include one or more single-core and/or multi-core processors. The hardware may also or alternatively include analog and/or digital circuitry other than that described above.

The memory 116 is configured to store software (e.g., program instructions) for execution by the processing device 118, which software execution may control and/or facilitate performance of one or more operations such as those described in the method below. The memory 116 may be a non-transitory computer readable medium. For example, the memory 116 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

The fixture 32 may be configured to secure the component 22 in a known, stationary position during the mechanical surface treatment. The fixture 32, for example, may clamp or otherwise hold the component 22, and the fixture 32 may be mounted to a stationary base. It is contemplated, however, the fixture 32 may alternatively be mounted to another moveable device to facilitate movement (e.g., adjustment, positioning, etc.) of the component 22 within the workspace 34.

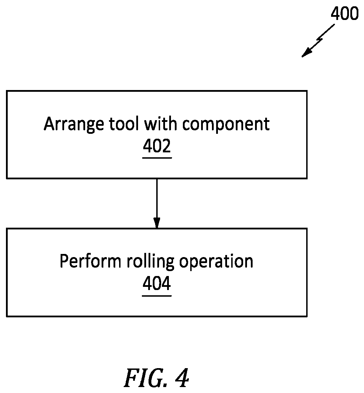

FIG. 4 is a flow diagram of a method 400 of operation for mechanical surface treating a component. For ease of description, the treatment method 400 is described below with reference to the treatment system 20 of FIGS. 1-3. The treatment method 400 of the present disclosure, however, may alternatively be performed with other mechanical surface treatment systems.

In step 402, the mechanical surface treatment tool 26 is arranged with the component 22. The controller 30, for example, may signal the manipulator 28 to locate the mechanical surface treatment tool 26 next to the component 22 such that the spherical roller 38 engages the component 22 and its component surface 24 to be treated.

In step 404, a rolling operation is performed on the component surface 24. The controller 30, for example, may signal the manipulator 28 to apply a static pressure load against the component 22 and its component surface 24 through the spherical roller 38. For example, the manipulator 28 may press the mechanical surface treatment tool 26 longitudinally along the axis 46 (e.g., vertically) against the component 22. Concurrently, the controller 30 may signal the manipulator 28 to move the mechanical surface treatment tool 26 laterally along the component 22. The spherical roller 38 may thereby roll along the component surface 24 while also applying the static pressure load. The rolling operation may thereby deep roll mechanical surface treat the material of the component 22 beneath the component surface 24. More particularly, the rolling operation may impart compressive stresses within the material of the component 22 along and beneath the component surface 24 being treated. The imparting of these compressive stresses may improve damage tolerance and/or a fatigue life of the component 22; e.g., by ten times (10x). Here, the component material is metal such as, but not limited to, steel, aluminum (Al) or an alloy thereof, titanium (Ti) or an alloy thereof, nickel (Ni) or an alloy thereof (e.g., Inconel^{®}, Waspaloy^{®}, etc.). The treatment method 400 of the present disclosure, however, is not limited to being performed on such metal components.

By configuring the mechanical surface treatment tool 26 with the spherical roller 38 rather than a wheel roller, the mechanical surface treatment tool 26 may move in various directions during the rolling operation without skidding (e.g., laterally slipping) and/or requiring the mechanical surface treatment tool 26 to be rotate about the axis 46. Moreover, by biasing the spherical roller 38 against the endwall bearing surface 74 through the spherical bearing element 40, skidding and/or other non-rolling motion of the spherical roller 38 may be reduced or prevented along the component surface 24.

**In** some embodiments, the static pressure load applied during the rolling step 404 may be maintained constant as the mechanical surface treatment tool 26 moves along the component surface 24. **In** other embodiments, the static pressure load applied during the rolling step 404 may be varied as the mechanical surface treatment tool 26 moves along the component surface 24.

The component 22 treated using the treatment system 20 and/or the treatment method 400 may have various configurations. The component 22, for example, may be configured as a component of an aircraft. The aircraft may be an airplane, a helicopter, a drone (e.g., an unmanned aerial vehicle (UAV)) or any other manned or unmanned aerial vehicle or system. The aircraft component may be a component of an aircraft airframe or a component of an aircraft engine; e.g., a gas turbine engine. Examples of the airframe component include, but are not limited to, a rib, a stringer, or a spar. Examples of the engine component include, but are not limited to, an engine case, a rotor blade (e.g., a fan blade (e.g., a root and/or an edge of the fan blade), a compressor blade (e.g., a root and/or an edge of the compressor blade), a turbine blade (e.g., a root and/or an edge of the turbine blade), etc.), a stator vane (e.g., a fan exit guide vane, a compressor vane, a turbine vane, a nozzle vane, etc.), a flowpath wall, a shroud (e.g., a blade outer air seal (BOAS)), a rotor disk or hub, or an integrally bladed rotor. The present disclosure, however, is not limited to treating aircraft components, or aerospace component in general. The engine component, for example, may be utilized for a non-aerospace engine such as an industrial gas turbine engine. In addition, the treatment method 400 may be used for mechanical surface treatment of various metals; e.g., pure metals and/or metal alloys.

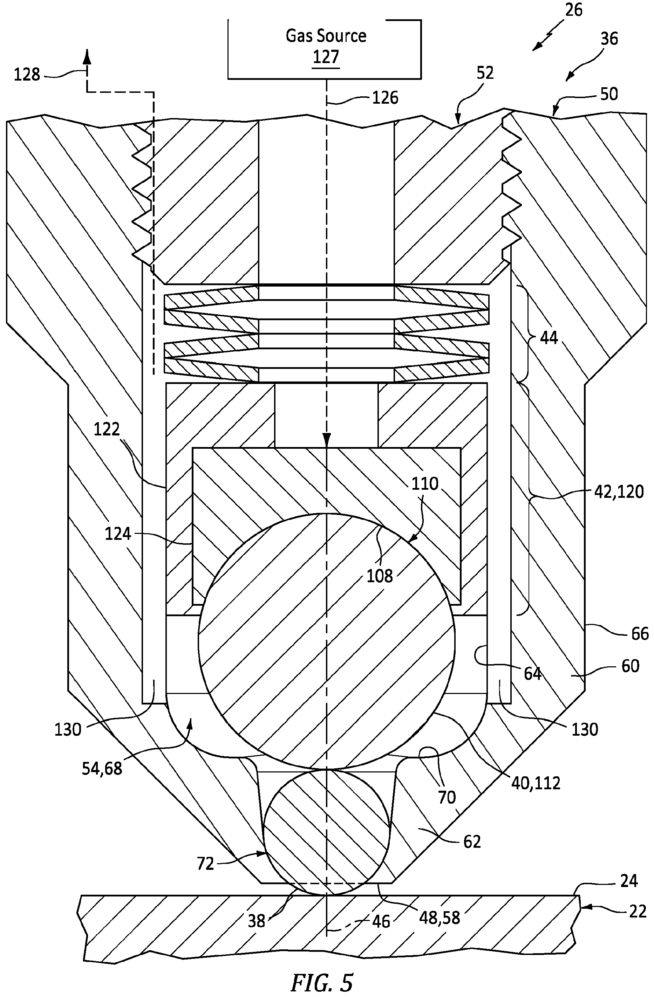

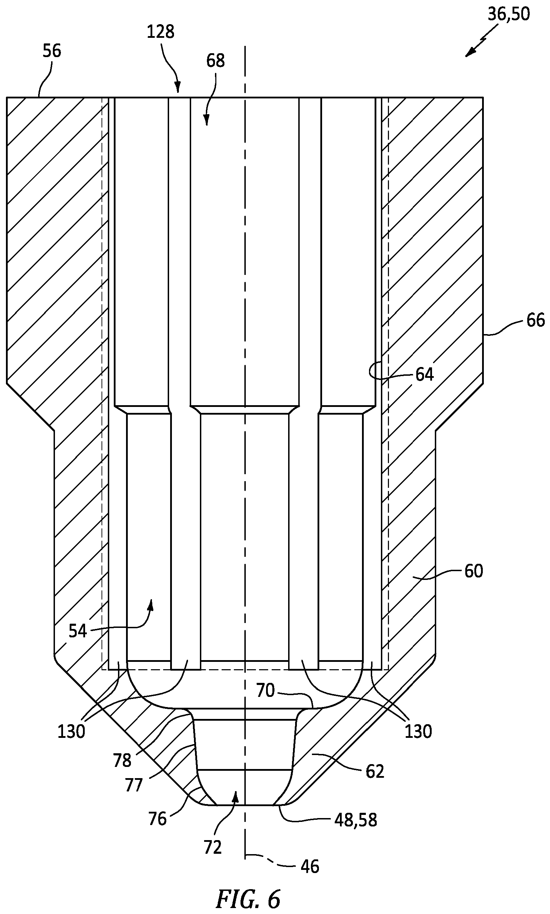

In some embodiments, referring to FIG. 5, the mechanical surface treatment tool 26 may be configured with a gas bearing 120; e.g., an air bearing. The bushing 42 of FIG. 5, for example, includes a carrier 122 and a porous bushing element 124 mounted to and seated in the carrier 122. The bushing element 124 of FIG. 5 includes the bushing bearing surface 108, and is formed from a fluid permeable material; e.g., porous carbon or porous graphite. This bushing element 124 is fluidly coupled between an internal source gas circuit 126 and the internal cavity 54. The gas circuit 126 is configured to direct pressurized air (or an inert gas) received from a gas source 127 to the bushing element 124. The gas may flow through pores of the bushing element 124 from the gas circuit 126 to the bushing bearing surface 108 to provide a gas cushion between the bushing bearing surface 108 and the spherical bearing element 40. The gas may then be removed from the internal cavity 54 through an exhaust circuit 128. Referring to FIG. 6, the exhaust circuit 128 may include one or more channels 130 in the support housing 50. The channels 130 of FIG. 6, for example, are arranged circumferentially about the axis 46 in an array; e.g., an annular array. Each channel 130 projects radially into the housing sidewall 60 from the sidewall inner side 64. Each channel 130 extends longitudinally in the housing sidewall 60 along the internal cavity 54 and away from the housing endwall 62. Here, a pressure of the gas may be tuned such that substantially none of the gas leaks out of the mechanical surface treatment tool 26 between the spherical roller 38 and the housing endwall 62.

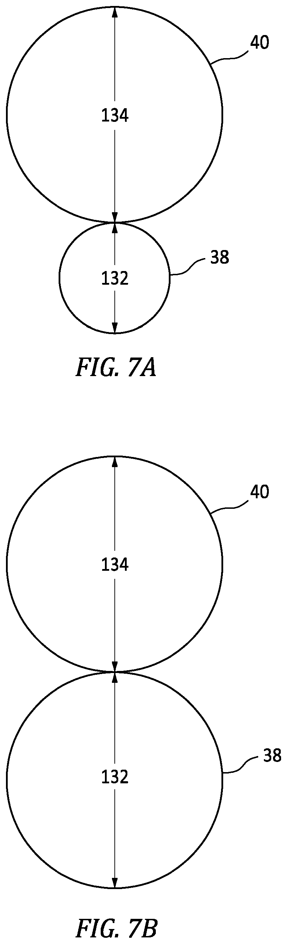

Referring to FIGS. 7A and 7B, the spherical roller 38 has a roller diameter 132 and the spherical bearing element 40 has a bearing element diameter 134. In some embodiments, referring to FIG. 7A, the bearing element diameter 134 may be greater than the roller diameter 132. The bearing element diameter 134, for example, may be equal to or greater than one and one-quarter times (1.25x), one and one-half times (1.5x), two times (2x), three times (3x) or more than the roller diameter 132. In other embodiments, referring to FIG. 7B, the roller diameter 132 may alternatively be equal to the bearing element diameter 134. Of course, it is contemplated other relationships between the bearing element diameter 134 and the roller diameter 132 may be used depending upon the specific tool requirements and/or mechanical surface treatment requirements.

## Claims

1. A system (20) for mechanical surface treating a component (22), comprising:
a tool (26) including a roller support (36), a spherical roller (38) and a biasing device (44), the roller support (36) including an endwall (62), a port (72) and an internal cavity (54), the roller support (36) extending longitudinally along a longitudinal axis (46) to the endwall (62), the port (72) extending from the internal cavity (54) through the endwall (62), the spherical roller (38) nested in the port (72) with an exposed portion (100) of the spherical roller (38) projecting out of the roller support (36) from the port (72), the exposed portion (100) of the spherical roller (38) configured to contact a surface (24) of the component (22), and the biasing device (44) disposed in the internal cavity (54) and configured to bias the spherical roller (38) against the endwall;
the tool (26) further includes a spherical bearing element (40) disposed in the internal cavity (54) and longitudinally contacting the spherical roller (38);
the biasing device (44) being configured to bias the spherical bearing element (40) against the spherical roller (38);
**characterised in that** the
system (20) further comprises: a manipulator (28) operatively coupled to the tool (26), the manipulator (28) configured to move the tool (26) along the surface (24) of the component (22) such that the spherical roller (38) rolls along the surface (24) of the component (22), and the manipulator (28) configured to apply a static pressure load against the surface (24) of the component (22) through the spherical roller (38),
wherein:
the tool (26) further includes a bushing (42) disposed in the internal cavity (54);
the spherical bearing element (40) is longitudinally between and contacts the spherical roller (38) and the bushing (42); and
the biasing device (44) is configured to bias the bushing (42) against the spherical bearing element (40).

2. The system (20) of claim 1, wherein:
the endwall (62) comprises a bearing surface (74) at least partially forming the port (72);
the bearing surface (74) comprises a spherical segment geometry; and
the biasing device (44) is configured to bias the spherical roller (38) against the bearing surface (74).

3. The system (20) of claim 2, wherein the bearing surface (74) extends to a longitudinal distal end (48) of the roller support (36).

4. The system (20) of claim 2 or 3, wherein:
the bearing surface (74) includes a bearing segment (76) and a bore segment (77);
the bearing segment (76) has the spherical segment geometry, and the biasing device (44) is configured to bias the spherical roller (38) against the bearing segment (76); and
the bore segment (77) has a frustoconical geometry flaring out from the bearing segment (76) as the bore segment (77) extends longitudinally towards the internal cavity (54).

5. The system (20) of any preceding claim, wherein the spherical bearing element (40) projects longitudinally into the port (72).

6. The system (20) of claim 5, wherein:
the spherical roller (38) has a roller diameter (132); and
the spherical bearing element (40) has a bearing element diameter (134) which is greater than or equal to the roller diameter (132).

7. The system (20) of any preceding claim, wherein:
the biasing device (44) longitudinally contacts the bushing (42).

8. The system (20) of any preceding claim, wherein:
the bushing (42) comprises a bearing surface (108) forming a recess (110) in the bushing (42);
the bearing surface (108) comprises a spherical segment geometry; and
the spherical bearing element (40) contacts and moves along the bearing surface (108).

9. The system (20) of any preceding claim, wherein the tool (26) further includes a gas bearing (120) comprising the bushing (42).

10. The system (20) of any preceding claim, wherein:
the tool (26) further includes an internal source gas circuit (126); and
the bushing (42) comprises a porous material fluidly coupling the internal source gas circuit (126) to the internal cavity (54).

11. The system (20) of any preceding claim, wherein the biasing device (44) comprises one or more Belleville springs (114).

12. The system (20) of any preceding claim, wherein:
the roller support (36) includes a housing (50) and an adaptor (52) threaded into the housing (50);
the housing (50) including a tubular sidewall (60) and the endwall; and
the cavity (54) extends through the tubular sidewall (60) from the adaptor (52) to the endwall.

13. The system (20) of claim 12, wherein the roller support (36) further includes one or more jam nuts (92) locking the adaptor (52) with the housing (50).

## Patentansprüche

1. System (20) zur mechanischen Oberflächenbehandlung eines Bauteils (22), umfassend:
ein Werkzeug (26), beinhaltend eine Rollenhalterung (36), eine kugelförmige Rolle (38) und eine Vorspannvorrichtung (44), die Rollenhalterung (36) beinhaltend eine Endwand (62),
eine Öffnung (72) und einen inneren Hohlraum (54), wobei sich die Rollenhalterung (36) in Längsrichtung entlang einer Längsachse (46) zu der Endwand (62) erstreckt,
wobei sich die Öffnung (72) von dem inneren Hohlraum (54) durch die Endwand (62) erstreckt,
wobei die kugelförmige Rolle (38) in der Öffnung (72) eingebettet ist und ein freiliegender Abschnitt (100) der kugelförmigen Rolle (38) durch die Öffnung (72) aus der Rollenhalterung (36) heraus vorsteht, wobei der freiliegende Abschnitt (100) der kugelförmigen Rolle (38) ausgelegt ist, um eine Oberfläche (24) des Bauteils (22) zu berühren, und die Vorspannvorrichtung (44) in dem inneren Hohlraum (54) angeordnet und ausgelegt ist, um die kugelförmige Rolle (38) gegen die Endwand vorzuspannen;
wobei das Werkzeug (26) ferner ein kugelförmiges Lagerelement (40), das in dem inneren Hohlraum (54) angeordnet ist und die kugelförmige Rolle (38) in Längsrichtung berührt, beinhaltet;
wobei die Vorspannvorrichtung (44) ausgelegt ist, um das kugelförmige Lagerelement (40) gegen die kugelförmige Rolle (38) vorzuspannen;
**dadurch gekennzeichnet, dass** das System (20) ferner umfasst: einen mit dem Werkzeug (26) wirkgekoppelten Manipulator (28), wobei der Manipulator (28) ausgelegt ist, um das Werkzeug (26) derart entlang der Oberfläche (24) des Bauteils (22) zu bewegen, dass die kugelförmige Rolle (38) entlang der Oberfläche (24) des Bauteils (22) rollt, und wobei der Manipulator (28) ausgelegt ist, um durch die kugelförmige Rolle (38) eine statische Druckbelastung gegen die Oberfläche (24) des Bauteils (22) aufzubringen,
wobei: das Werkzeug (26) ferner eine in dem inneren Hohlraum (54) angeordnete Buchse (42) beinhaltet;
sich das kugelförmige Lagerelement (40) in Längsrichtung zwischen der kugelförmigen Rolle (38) und der Buchse (42) befindet und diese jeweils berührt; und
die Vorspannvorrichtung (44) ausgelegt ist, um die Buchse (42) gegen das kugelförmige Lagerelement (40) vorzuspannen.

2. System (20) nach Anspruch 1, wobei:
die Endwand (62) eine Lageroberfläche (74), die mindestens teilweise die Öffnung (72) ausbildet, umfasst;
die Lageroberfläche (74) eine kugelförmige Segmentgeometrie umfasst; und
die Vorspannvorrichtung (44) ausgelegt ist, um die kugelförmige Rolle (38) gegen die Lageroberfläche (74) vorzuspannen.

3. System (20) nach Anspruch 2, wobei sich die Lageroberfläche (74) zu einem in Längsrichtung distalen Ende (48) der Rollenhalterung (36) erstreckt.

4. System (20) nach Anspruch 2 oder 3, wobei:
die Lageroberfläche (74) ein Lagersegment (76) und ein Bohrungssegment (77) beinhaltet;
das Lagersegment (76) die kugelförmige Segmentgeometrie aufweist und die Vorspannvorrichtung (44) ausgelegt ist, um die kugelförmige Rolle (38) gegen das Lagersegment (76) vorzuspannen; und
das Bohrungssegment (77) eine kegelstumpfförmige Geometrie aufweist, die sich von dem Lagersegment (76) aus aufweitet, während sich das Bohrungssegment (77) in Längsrichtung zu dem inneren Hohlraum (54) hin erstreckt.

5. System (20) nach einem der vorhergehenden Ansprüche, wobei das kugelförmige Lagerelement (40) in Längsrichtung in die Öffnung (72) hinein vorsteht.

6. System (20) nach Anspruch 5, wobei:
die kugelförmige Rolle (38) einen Rollendurchmesser (132) aufweist; und
das kugelförmige Lagerelement (40) einen Lagerelementdurchmesser (134), der größer als der oder gleich dem Rollendurchmesser (132) ist, aufweist.

7. System (20) nach einem der vorhergehenden Ansprüche, wobei:
die Vorspannvorrichtung (44) die Buchse (42) in Längsrichtung berührt.

8. System (20) nach einem der vorhergehenden Ansprüche, wobei:
die Buchse (42) eine Lageroberfläche (108), die eine Ausnehmung (110) in der Buchse (42) ausbildet, umfasst;
die Lageroberfläche (108) eine kugelförmige Segmentgeometrie umfasst; und
das kugelförmige Lagerelement (40) die Lageroberfläche (108) berührt und sich entlang dieser bewegt.

9. System (20) nach einem der vorhergehenden Ansprüche, wobei das Werkzeug (26) ferner ein die Buchse (42) umfassendes Gaslager (120) beinhaltet.

10. System (20) nach einem der vorhergehenden Ansprüche, wobei:
das Werkzeug (26) ferner einen inneren Quellgaskreislauf (126) beinhaltet; und
die Buchse (42) ein poröses Material, das den inneren Quellgaskreislauf (126) fluidisch mit dem inneren Hohlraum (54) koppelt, umfasst.

11. System (20) nach einem der vorhergehenden Ansprüche, wobei die Vorspannvorrichtung (44) eine oder mehrere Tellerfedern (114) umfasst.

12. System (20) nach einem der vorhergehenden Ansprüche, wobei:
die Rollenhalterung (36) ein Gehäuse (50) und einen in das Gehäuse (50) eingeschraubten Adapter (52) beinhaltet;
das Gehäuse (50) beinhaltend eine rohrförmige Seitenwand (60) und die Endwand; und
sich der Hohlraum (54) durch die rohrförmige Seitenwand (60) von dem Adapter (52) zu der Endwand erstreckt.

13. System (20) nach Anspruch 12, wobei die Rollenhalterung (36) ferner eine oder mehrere Kontermuttern (92), die den Adapter (52) mit dem Gehäuse (50) verriegeln, beinhaltet.

## Revendications

1. Système (20) de traitement mécanique de surface d'un composant (22), comprenant :
un outil (26) comportant un support de rouleau (36), un rouleau sphérique (38) et un dispositif de sollicitation (44), le support de rouleau (36) comportant une paroi d'extrémité (62), un orifice (72) et une cavité interne (54), le support de rouleau (36) s'étendant longitudinalement le long d'un axe longitudinal (46) jusqu'à la paroi d'extrémité (62),
l'orifice (72) s'étendant à partir de la cavité interne (54) à travers la paroi d'extrémité (62),
le rouleau sphérique (38) emboîté dans l'orifice (72) avec une partie exposée (100) du rouleau sphérique (38) faisant saillie hors du support de rouleau (36) à partir de l'orifice (72), la partie exposée (100) du rouleau sphérique (38) étant configurée pour entrer en contact avec une surface (24) du composant (22), et le dispositif de sollicitation (44) étant disposé dans la cavité interne (54) et configuré pour solliciter le rouleau sphérique (38) contre la paroi d'extrémité ;
l'outil (26) comportant en outre un élément de roulement sphérique (40) disposé dans la cavité interne (54) et en contact longitudinalement avec le rouleau sphérique (38) ;
le dispositif de sollicitation (44) étant configuré pour solliciter l'élément de roulement sphérique (40) contre le rouleau sphérique (38) ;
**caractérisé en ce que** le système (20) comprend en outre : un manipulateur (28) accouplé fonctionnellement à l'outil (26), le manipulateur (28) étant configuré pour déplacer l'outil (26) le long de la surface (24) du composant (22) de sorte que le rouleau sphérique (38) roule le long de la surface (24) du composant (22), et le manipulateur (28) étant configuré pour appliquer une charge de pression statique contre la surface (24) du composant (22) par l'intermédiaire du rouleau sphérique (38), dans lequel : l'outil (26) comporte en outre une bague (42) disposée dans la cavité interne (54) ;
l'élément de roulement sphérique (40) est agencé longitudinalement entre le rouleau sphérique (38) et la bague (42), et entre en contact avec ceux-ci ; et
le dispositif de sollicitation (44) est configuré pour solliciter la bague (42) contre l'élément de roulement sphérique (40).

2. Système (20) selon la revendication 1, dans lequel :
la paroi d'extrémité (62) comprend une surface de roulement (74) formant au moins en partie l'orifice (72) ;
la surface de roulement (74) comprend une géométrie de segment sphérique ; et
le dispositif de sollicitation (44) est configuré pour solliciter le rouleau sphérique (38) contre la surface de roulement (74).

3. Système (20) selon la revendication 2, dans lequel la surface de roulement (74) s'étend jusqu'à une extrémité distale longitudinale (48) du support de rouleau (36).

4. Système (20) selon la revendication 2 ou 3, dans lequel :
la surface de roulement (74) comporte un segment de roulement (76) et un segment d'alésage (77) ;
le segment de roulement (76) a la géométrie de segment sphérique, et le dispositif de sollicitation (44) est configuré pour solliciter le rouleau sphérique (38) contre le segment de roulement (76) ; et
le segment d'alésage (77) a une géométrie tronconique s'évasant à partir du segment de roulement (76) au fur et à mesure que le segment d'alésage (77) s'étend longitudinalement vers la cavité interne (54).

5. Système (20) selon une quelconque revendication précédente, dans lequel l'élément de roulement sphérique (40) fait saillie longitudinalement à l'intérieur de l'orifice (72).

6. Système (20) selon la revendication 5, dans lequel :
le rouleau sphérique (38) a un diamètre de rouleau (132) ; et
l'élément de roulement sphérique (40) a un diamètre d'élément de roulement (134) qui est supérieur ou égal au diamètre de rouleau (132).

7. Système (20) selon une quelconque revendication précédente, dans lequel :
le dispositif de sollicitation (44) entre en contact longitudinalement avec la bague (42).

8. Système (20) selon une quelconque revendication précédente, dans lequel :
la bague (42) comprend une surface de roulement (108) formant un évidement (110) dans la bague (42) ;
la surface de roulement (108) comprend une géométrie de segment sphérique ; et
l'élément de roulement sphérique (40) entre en contact avec la surface de roulement (108) et se déplace le long de celle-ci.

9. Système (20) selon une quelconque revendication précédente, dans lequel l'outil (26) comporte en outre un palier à gaz (120) comprenant la bague (42).

10. Système (20) selon une quelconque revendication précédente, dans lequel :
l'outil (26) comporte en outre un circuit de gaz source interne (126) ; et
la bague (42) comprend un matériau poreux accouplant de manière fluidique le circuit de gaz source interne (126) à la cavité interne (54).

11. Système (20) selon une quelconque revendication précédente, dans lequel le dispositif de sollicitation (44) comprend un ou plusieurs ressorts Belleville (114).

12. Système (20) selon une quelconque revendication précédente, dans lequel :
le support de rouleau (36) comporte un logement (50) et un adaptateur (52) vissé dans le logement (50) ;
le logement (50) comprenant une paroi latérale tubulaire (60) et la paroi d'extrémité ; et
la cavité (54) s'étendant à travers la paroi latérale tubulaire (60) de l'adaptateur (52) jusqu'à la paroi d'extrémité.

13. Système (20) selon la revendication 12, dans lequel le support de rouleau (36) comporte en outre un ou plusieurs contre-écrous (92) verrouillant l'adaptateur (52) avec le logement (50).
